# EUROPEAN PATENT APPLICATION

(11) **EP 4 761 039 A1**
(43) Date of publication of application: **17.06.2026**
(21) Application number: 24903907.4
(22) Date of filing: 24.09.2024
(51) Int. Cl.: H02J 7/00, B60L 58/22, H01M 10/44

(54) **BATTERY SYSTEM AND OPERATION METHOD THEREOF**

(30) Priority: 13.12.2023 KR 20230180527
(71) Applicant: LG Energy Solution, Ltd., Seoul 07335 (KR)
(72) Inventor: LEE, Sung Gun, Daejeon 34122 (KR)
(74) Representative: Plasseraud IP
(86) International application number: PCT/KR2024/014340
(87) International publication number: WO 2025/127336

(57) **Abstract**

A battery system according to an embodiment disclosed in this document includes a plurality of battery cells; a plurality of antennas correspondingly connected to the plurality of battery cells for each power transmission and reception of the plurality of battery cells, and different in pattern size from one another according to the corresponding battery cells; and a battery management device configured to control connections between the plurality of battery cells and the plurality of antennas based on each state of the plurality of battery cells and keep a state of charge (SoC) balance between the plurality of battery cells.

## Description

### TECHNICAL FIELD

### CROSS-REFERENCE TO RELATED APPLICATION

This application claims priority to and the benefit of Korean Patent Application No. 10-2023-0180527 filed in the Korean Intellectual Property Office on December 13, 2023, the entire contents of which are incorporated herein by reference.

### TECHNICAL FIELD

Embodiments disclosed herein relate to a battery system and an operation method thereof.

### BACKGROUND ART

Recently, research and development on secondary batteries have been actively conducted. Here, the secondary batteries refer to batteries that can be charged and discharged, and encompass both conventional Ni/Cd, Ni/MH, etc. batteries, and recent lithium-ion batteries. Among the secondary batteries, the lithium-ion batteries have advantages of having much higher energy density than the conventional Ni/Cd, Ni/MH, etc. batteries. Further, the lithium-ion batteries are used as power sources for mobile devices because they can be made small and lightweight. Recently, the lithium-ion batteries have attracted attention as the next-generation energy storage medium as their use has expanded to power sources for electric vehicles.

The secondary battery includes battery modules in which battery cells, i.e., the minimum units for storing energy, are connected to one another. To maximize longevity, the battery cells need to undergo cell balancing that reduce variations therebetween. The cell balancing is classified into passive cell balancing that dissipates the energy of a target battery cell, and active cell balancing that charges other battery cells with the energy of the target battery cell. Here, the active cell balancing requires various circuit configurations such as switching elements and wires connected to all the battery cells, thereby causing a problem with space utilization inside a battery pack and a problem of increasing circuit complexity.

### DISCLOSURE

### TECHNICAL PROBLEM

An aspect of embodiments disclosed in this document is to provide a battery system and an operation method thereof, in which cell balancing is performed based on a wireless antenna printed as a pattern on a printed circuit board (PCB).

The technical problems of embodiments disclosed in this document are not limited to the aforementioned technical problems, and other unmentioned technical problems will become apparent to those skilled in the art, to which the disclosure pertains, from the following descriptions.

### TECHNICAL SOLUTION

According to an embodiment disclosed in this document, a battery system includes: a plurality of battery cells; a plurality of antennas correspondingly connected to the plurality of battery cells for each power transmission and reception of the plurality of battery cells, and different in pattern size from one another according to the corresponding battery cells; and a battery management device configured to control connections between the plurality of battery cells and the plurality of antennas based on each state of the plurality of battery cells and keep a state of charge (SoC) balance between the plurality of battery cells.

According to an embodiment, the plurality of antennas may be disposed on a plurality of stacked printed circuit boards (PCBs) to which the battery management device is mounted.

According to an embodiment, the plurality of antennas may be coupled to each other.

According to an embodiment, the corresponding antennas among the plurality of antennas respectively formed on different PCBs among the plurality of PCBs may be configured to have pattern sizes corresponding to one another.

According to an embodiment, the battery system may further include a plurality of switches for electrical connection between the plurality of battery cells and the plurality of antennas, wherein the battery management device controls the electrical connection of the plurality of switches to keep the SoC balance between the plurality of battery cells.

According to an embodiment, the battery management device may include: a data acquisition unit configured to acquire battery data about at least one of voltage, current and temperature of each battery cell; and a controller configured to control the electrical connection of the plurality of switches, and identify at least one first target battery cell to supply power among the plurality of battery cells and at least one second target battery cell to receive the power supplied from the first target battery cell, based on each SoC of the plurality of battery cells calculated based on the battery data.

According to an embodiment, the controller may be configured to: identify the first target battery cell from the battery cell having the highest SoC among the plurality of battery cells; and identify the second target battery cell from the battery cell having the lowest SoC among the plurality of battery cells.

According to an embodiment, the controller may be configured to: control the electrical connection of a first switch between the first target battery cell and a first antenna corresponding to the first target battery cell to transfer power from the first target battery cell to the first antenna; and control the electrical connection of a second switch between the second target battery cell and a second antenna corresponding to the second target battery cell to transfer the power from the first antenna to the second target battery cell.

According to an embodiment, the controller may control the electrical connection between the first switch and the second switch until the SoC of the second target battery cell reaches a preset reference SoC.

According to an embodiment disclosed in this document, a method of operating a battery system includes: acquiring battery data about at least one of voltage, current and temperature of each of a plurality of battery cells; and keeping a state of charge (SoC) balance between the plurality of battery cells by controlling connections between the plurality of battery cells and a plurality of antennas respectively corresponding to the plurality of battery cells based on each state of the plurality of battery cells.

According to an embodiment, the plurality of antennas may be disposed on a plurality of stacked printed circuit boards (PCBs) to which a battery management device is mounted, and the plurality of antennas are different in pattern size from one another according to the corresponding battery cells.

According to an embodiment, the keeping the SoC balance between the plurality of battery cells may include: calculating each SoC of the plurality of battery cells based on the battery data; identifying at least one first target battery cell to supply power among the plurality of battery cells and at least one second target battery cell to receive the power supplied from the first target battery cell, based on each SoC of the plurality of battery cells; control the electrical connection of a first switch between the first target battery cell and a first antenna corresponding to the first target battery cell to transfer power from the first target battery cell to the first antenna; and electrically connecting a second switch between the second target battery cell and a second antenna corresponding to the second target battery cell to transfer the power from the first antenna to the second target battery cell.

According to an embodiment, the identifying the first target battery cell and the second target battery cell may include: identifying the first target battery cell from the battery cell having the highest SoC among the plurality of battery cells; and identifying the second target battery cell from the battery cell having the lowest SoC among the plurality of battery cells.

According to an embodiment, the keeping the SoC balance between the plurality of battery cells may be performed until the SoC of the second target battery cell reaches a preset reference SoC.

### ADVANTAGEOUS EFFECTS

According to an embodiment disclosed in this document, there are provided a battery system and an operating method thereof, in which cell balancing is performed based on a simplified circuit.

The effects of an embodiment disclosed in this document are not limited to the aforementioned effects, and other unmentioned effects will become apparent to those skilled in the art from the disclosure of this document.

### DESCRIPTION OF DRAWINGS

FIG. 1 is a diagram for describing a battery system according to an embodiment disclosed in this document.
FIG. 2 is a diagram for describing an antenna according to an embodiment disclosed in this document.
FIG. 3 is a diagram for describing an antenna according to an embodiment disclosed in this document.
FIG. 4 is a diagram for describing connection between a battery cell and an antenna according to an embodiment disclosed in this document.
FIG. 5 is a diagram for describing operations of a controller according to an embodiment disclosed in this document.
FIG. 6 is a flowchart for describing operations of a battery system according to an embodiment disclosed in this document.
FIG. 7 is a flowchart for describing operations of a battery system according to an embodiment disclosed in this document.

### MODE FOR INVENTION

Hereinafter, embodiments disclosed in this document will be described in detail with reference to illustrative drawings. It should be noted that, in designating elements with reference numerals in drawings, the same elements will be designated with the same reference numerals as much as possible even though they are shown in different drawings. Further, in describing the embodiments disclosed in this document, detailed descriptions of publicly known configurations or functions incorporated herein will be omitted if it is determined that they interfere with the understanding of the embodiments disclosed in this document.

In describing elements of the embodiments disclosed in this document, terms, such as first, second, A, B, (a), and (b) may be used herein. Each of these terminologies is not used to define an essence, order or sequence of a corresponding component but used merely to distinguish the corresponding component from other component(s). Further, unless otherwise defined herein, all terms used herein including technical or scientific terms have the same meanings as those generally understood by those skilled in the art to which the embodiments disclosed in this document pertains. Terms defined in dictionaries generally used should be construed to have meanings matching with contextual meanings in the related art and are not to be construed as an ideal or excessively formal meaning unless explicitly defined herein.

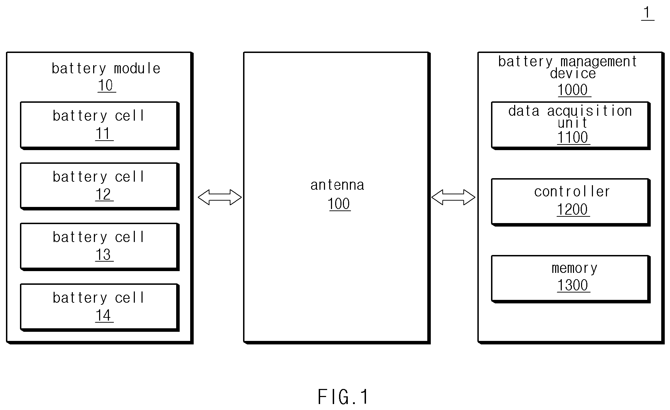

FIG. 1 is a diagram for describing a battery system according to an embodiment disclosed in this document.

Referring to FIG. 1, a battery system 1 according to an embodiment disclosed in this document may include a battery module 10, an antenna 100, and a battery management device 1000.

The battery module 10 may include a plurality of battery cells 11, 12, 13 and 14. FIG. 1 illustrates four battery cells, but the plurality of battery cells is not limited to this example. The battery module 10 may include n battery cells (where, n is a natural number greater than or equal to 2).

The plurality of battery cells 11, 12, 13 and 14 may be, but not limited to, lithium ion (Li-ion) batteries, Li-ion polymer batteries, nickel-cadmium (Ni-Cd) batteries, nickel-hydrogen (Ni-MH) batteries, etc. Meanwhile, FIG. 1 illustrates one battery module 10, but there may be provided a plurality of battery modules 10 according to an embodiment.

The battery module 10 may supply power to a target device (not shown). To this end, the battery module 10 may be electrically connected to the target device. Here, the target device may include an electrical, electronic or mechanical device that operates with power received from the battery system 1 including the plurality of battery cells 11, 12, and 13. For example, the target device may include, but not limited thereto, an electric vehicle (EV), a two-wheeled electric vehicle such as an electric scooter, or etc.

The antenna 100 is electrically connected to the plurality of battery cells 11, 12, 13 and 14 included in the battery module 10, and configured to transfer power supplied from the plurality of battery cells 11, 12, 13 and 14. For example, the antenna 100 may be configured to transfer power between the plurality of battery cells 11, 12, 13 and 14 when cell balancing is performed between the plurality of battery cells 11, 12, 13 and 14, but is not limited to this example.

According to an embodiment, the antenna 100 may include a wired and/or wireless antenna. Details of the antenna 100 will be described later.

The battery management device 1000 may manage and/or control the states and/or operations of the battery module 10. For example, the battery management device 1000 may manage and/or control the states and/or operations of the plurality of battery cells 11, 12, 13 and 14 included in the battery module 10, or may manage the charging and/or discharging of the battery module 10.

According to an embodiment, the battery management device 1000 may include a data acquisition unit 1100, a controller 1200, and a memory 1300.

The data acquisition unit 1100 may acquire battery data related to at least one among the voltage, current and temperature of each of the plurality of battery cells 11, 12, 13 and 14. According to an embodiment, the data acquisition unit 1100 may acquire the battery data by monitoring the voltage, current, temperature, etc. of the battery module 10 and/or each of the plurality of battery cells 11, 12, 13 and 14 included in the battery module 10. In this case, for the monitoring of the data acquisition unit 1100, sensors or various measurement modules (not shown) may be additionally installed in the battery module 10, charging/discharging paths.

According to an embodiment, the data acquisition unit 10 may indirectly acquire the battery data about the battery module 10 and/or each of the plurality of battery cells 11, 12, 13 and 14 included in the battery module 10. In this case, the data acquisition unit 1100 may include a wired and/or wireless communication module for acquiring the battery data.

The controller 1200 may control the overall operations of the battery management device 1000. For example, the controller 1200 executes software to control at least one other component (for example, hardware or software) of the battery management device 1000, or perform operations such as processing and/or calculating various data.

According to an embodiment, the controller 1200 may calculate parameters, for example a state of charge (SoC), a state of health (SoH), or the like representing the state of the battery module 10 and/or each of the plurality of battery cells 11, 12, 13 and 14 included in the battery module 10 based on the battery data acquired by the data acquisition unit 1100.

According to an embodiment, the controller 1200 may balance the SoC of the plurality of battery cells 11, 12, 13 and 14. For example, the controller 1200 may control electrical connection between the antenna 100 and the battery module 10 and/or the plurality of battery cells 11, 12, 13 and 14 included in the battery module 10 to perform the cell balancing. Here, the controller 1200 may identify at least one first target battery cell which will provide power and at least one second target battery cell which will receive the power provided by the first target battery cell, based on each SoC of the plurality of battery cells 11, 12, 13 and 14.

The memory 1300 may store battery data about at least one among the voltage, current and temperature of the battery module 10 and/or each of the plurality of battery cells 11, 12, 13 and 14 included in the battery module 10, and data about the SoC or SoH of the plurality of battery cells 11, 12, 13 and 14. According to an embodiment, the memory 1300 may include a volatile memory device such as a static random access memory (SRAM) or a dynamic random access memory (DRAM), or a non-volatile memory device such as a read only memory (ROM), a programmable ROM (PROM), or a flash memory.

According to an embodiment, the antenna 100 may be located on a printed circuit board (PCB) to which the battery management device 1000 is mounted. The relationship between the antenna 100 and a plurality of PCBs will be described later.

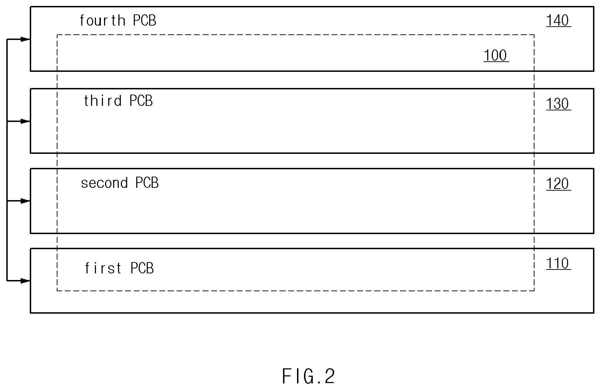

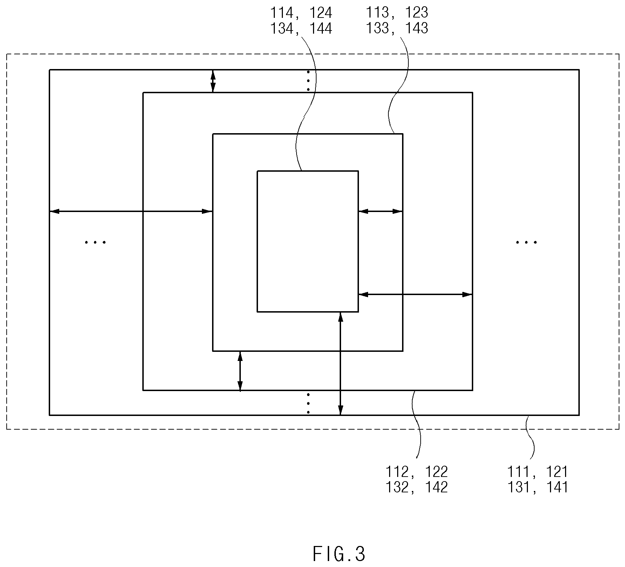

FIGS. 2 and 3 are diagrams for describing an antenna according to an embodiment disclosed in this document.

First, referring to FIG. 2, the antenna 100 may be implemented in the form of stacking a plurality of PCBs 110, 120, 130, and 140.

The antenna 100 may include the plurality of PCBs 110, 120, 130, and 140, and a plurality of antennas (not shown) printed on the plurality of PCBs 110, 120, 130, and 140, respectively. Here, the plurality of PCBs 110, 120, 130, and 140 may have the same size and may be stacked as aligned with each other, thereby forming the antenna 100.

According to an embodiment, the plurality of PCBs 110, 120, 130, and 140 may be a PCB to which the battery management device 1000 (see Fig. 1) is mounted. For example, various circuit configurations of the battery management device 1000 may be mounted to at least one PCB 110, 120, 130, 140 among the plurality of PCBs 110, 120, 130, and 140.

Referring to FIG. 3, the configurations of the antennas 111 to 144 formed on one PCB are illustrated.

According to an embodiment, the plurality of antennas 111 to 144 may be formed on the plurality of stacked PCBs 110, 120, 130, and 140, respectively. Here, the plurality of antennas 111 to 144 may include inductors printed to have certain patterns on the PCB. For example, as shown in FIG. 3, the plurality of antennas 111 to 144 may be respectively formed on the plurality of PCBs 110, 120, 130, and 140 to have rectangular patterns, but are not limited to this example.

According to an embodiment, the plurality of antennas 111, 112, 113 and 114 may be formed on a first PCB 110 (see FIG. 2), the plurality of antennas 121, 122, 123 and 124 may be formed on a second PCB 120 (see FIG. 2), the plurality of antennas 131, 132, 133 and 134 may be formed on a third PCB 130 (see FIG. 2), and the plurality of antennas 141, 142, 143 and 144 may be formed on a fourth PCB 140 (see FIG. 2). Although it is described that four antennas are formed on one PCB, the configurations of the antennas are not limited to this example.

According to an embodiment, the plurality of antennas 111 to 144 may correspond to the plurality of battery cells, respectively. For example, the antenna 111 may be connected to the battery cell 11 (see FIG. 1), the antenna 112 may be connected to the battery cell 12 (see FIG. 1), the antenna 113 may be connected to the battery cell 13 (see FIG. 1), and the antenna 114 may be connected to the battery cell 14 (see FIG. 1), but the configurations of the antennas are not limited to these examples. In other words, the plurality of antennas are only required to correspond to the plurality of battery cells, respectively.

According to an embodiment, the plurality of antennas 111, 112, 113 and 114 patterned on one PCB, for example, the first PCB 110, may be different in size from one another. For example, when the plurality of antennas 111, 112, 113 and 114 are formed to have rectangle patterns, the size, i.e., the width and length of the pattern of the antenna 111 may be different from those of the antennas 112, 113 and 114. As shown in FIG. 3, the pattern of the antenna 111 may have the largest width and length, and the pattern of the antenna 112 may have the smaller width and length than the pattern of the antenna 111 so that the pattern of the antenna 112 can be within the pattern of the antenna 111. Likewise, the pattern of the antenna 113 may have the smaller width and length than the pattern of the antenna 112 so that the pattern of the antenna 113 can be within the pattern of the antenna 112, and the pattern of the antenna 114 may have the smaller width and length than the pattern of the antenna 113 so that the pattern of the antenna 114 can be within the pattern of the antenna 113.

According to an embodiment, the plurality of antennas 111, 112, 113 and 114 may be patterned having certain consistency (for example, a certain ratio of the width and the length), but is not limited to this example.

According to an embodiment, the corresponding antennas among the plurality of antennas respectively formed on different PCBs among the plurality of PCBs 110, 120, 130 and 140 may be configured to have pattern sizes corresponding to one another. For example, the largest antenna 111 formed on the first PCB 110, the largest antenna 121 formed on the second PCB 120, the largest antenna 131 formed on the third PCB 130, and the largest antenna 141 formed on the fourth PCB 140 may be configured to have pattern sizes corresponding to one another. Likewise, the corresponding antennas (for example, 112, 122, 132 and 142) among the plurality of antennas respectively formed on the plurality of PCBs 110, 120, 130 and 140 may be configured to have pattern sizes corresponding to one another.

According to an embodiment, the plurality of antennas (for example, 111, 112, 113 and 114) formed on the first PCB may be coupled to one another. For example, the antenna 111 may be coupled to the antennas 112, 113 and 114 formed on the first PCB 110, the antenna 112 may be coupled to the antennas 113 and 114 formed on the first PCB 110, and the antenna 113 may be coupled to the antenna 114 formed on the first PCB 110. Likewise, the plurality of antennas 121, 122, 123 and 124 formed on the second PCB 120 may also be coupled to one another, the plurality of antennas 131, 132, 133 and 134 formed on the third PCB 130 may also be coupled to one another, and the plurality of antennas 141, 142, 143 and 144 formed on the fourth PCB 140 may also be coupled to one another.

According to an embodiment, the plurality of antennas 111 to 144 respectively formed on the plurality of PCBs 110, 120, 130, and 140 may couple with one another. For example, the plurality of antennas 111 to 114 formed on the first PCB 110 may couple with the plurality of antennas 121 to 124 formed on the second PCB 120, the plurality of antennas 131 to 134 formed on the third PCB 130, and the plurality of antennas 141 to 144 formed on the fourth PCB 140. Likewise, the plurality of antennas 121 to 124 formed on the second PCB 120 may couple with the plurality of antennas 131 to 134 formed on the third PCB 130 and the plurality of antennas 141 to 144 formed on the fourth PCB 140, and the plurality of antennas 131 to 134 formed on the third PCB 130 may couple with the plurality of antennas 141 to 144 formed on the fourth PCB 140.

According to an embodiment, the coupling of different antennas may mean that those antennas fall under the influence of magnetic fields generated by them. For example, when the plurality of antennas 141 to 144 formed on the fourth PCB 140 are all influenced by the magnetic field generated for the wireless transmission of power and/or data by the antenna 111 formed on the first PCB 110, it means that the antenna 111 formed on the first PCB 110 couples with the plurality of antennas 141 to 144 formed on the fourth PCB 140.

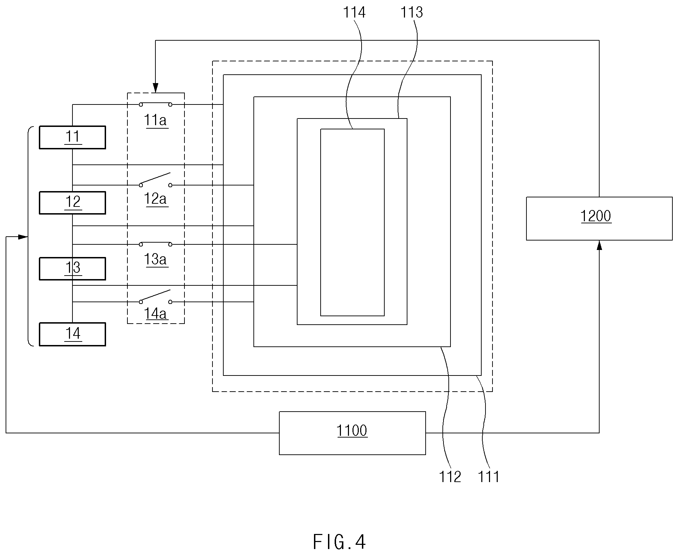

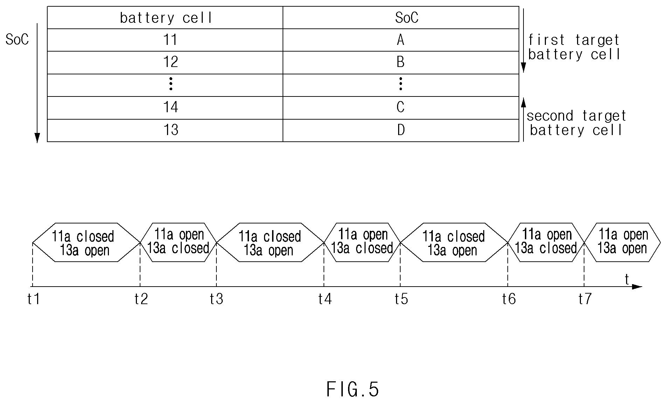

FIG. 4 is a diagram for describing connection between a battery cell and an antenna according to an embodiment disclosed in this document, and FIG. 5 is a diagram for describing operations of a controller according to an embodiment disclosed in this document.

Referring to FIG. 4, the plurality of battery cells 11, 12, 13 and 14 may be electrically connected to the plurality of corresponding antennas 111, 112, 113 and 114, respectively.

As described above, the data acquisition unit 1100 may acquire battery data, i.e., data related to at least one of the voltage, current and temperature of each of the plurality of battery cells 11, 12, 13 and 14. Here, the data acquisition unit 1100 may directly monitor the voltage, current and temperature of each of the plurality of battery cells 11, 12, 13 and 14, and/or indirectly acquire the battery data of each of the plurality of battery cells 11, 12, 13 and 14.

According to an embodiment, the controller 1200 may keep an SoC balance between the plurality of battery cells 11, 12, 13 and 14 based on the battery data. The controller 1200 may identify at least one first target battery cell and at least one second target battery cell based on each SoC of the plurality of battery cells 11, 12, 13 and 14 calculated based on the battery data of each of the plurality of battery cells 11, 12, 13 and 14.

FIG. 5 shows each SoC of the plurality of battery cells 11, 12, 13 and 14 according to an embodiment, which is calculated based on each battery data of the plurality of battery cells 11, 12, 13 and 14. According to an embodiment, the first battery cell 11 may have the highest SoC (A), and the third battery cell 13 may have the lowest SOC (D). The SoC of the plurality of battery cells 11, 12, 13 and 14 may be tabulated in descending order.

According to an embodiment, the controller 1200 may identify at least one first target battery cell based on the battery cell having the highest SoC among the plurality of battery cells 11, 12, 13 and 14. For example, in the case of identifying one first target battery cell, the controller 1200 may identify the first battery cell 11 having the highest SoC as the first target battery cell among the plurality of battery cells 11, 12, 13 and 14. Similarly, in the case of identifying two first target battery cells, the controller 1200 may identify a total of two battery cells 11 and 12 including up to the second from the battery cell having the highest SoC as the first target battery cells among the plurality of battery cells 11, 12, 13 and 14.

According to an embodiment, the controller 1200 may identify at least one second target battery cell based on the battery cell having the lowest SoC among the plurality of battery cells 11, 12, 13 and 14. For example, in the case of identifying one second target battery cell, the controller 1200 may identify the third battery cell 13 having the lowest SoC as the second target battery cell among the plurality of battery cells 11, 12, 13 and 14. Similarly, in the case of identifying two second target battery cells, the controller 1200 may identify a total of two battery cells 13 and 14 including up to the second from the battery cell having the lowest SoC as the second target battery cells among the plurality of battery cells 11, 12, 13 and 14.

Referring back to FIG. 4, the plurality of battery cells 11, 12, 13 and 14 according to an embodiment may be connected to different antennas, respectively. For example, the first battery cell 11 may be electrically connected to a first antenna 111, the second battery cell 12 may be electrically connected to a second antenna 112, the third battery cell 13 may be electrically connected to a third antenna 113, and the fourth battery cell 14 may be electrically connected to a fourth antenna 114.

According to an embodiment, switches 11a, 12a, 13a and 14a for controlling electrical connection may be provided between the plurality of battery cells 11, 12, 13 and 14 and the plurality of corresponding antennas 111, 112, 113 and 114.

The controller 1200 may control the connection between the switch between the first target battery cell and the antenna corresponding to the first target battery cell and the switch between the second target battery cell and the antenna corresponding to the second target battery cell so that power can be transferred from the first target battery cell to the second target battery cell. Below, for convenience of description, it will be assumed that the first target battery cell is the first battery cell 11 and the second target battery cell is the third battery cell 13, but the battery cells are not limited to this assumption. The controller 1200 may control the electrical connection between the switches 11a and 13a so that power can be supplied from the first target battery cell 11 to the second target battery cell 13 until the SoC of the third battery cell 13, i.e., the second target battery cell reaches a preset reference SoC.

According to an embodiment, the controller 1200 may control the electrical connection of the first switch 11a between the first battery cell 11, i.e., the first target battery cell and the antenna 111 corresponding to the first battery cell 11, and may control the electrical connection of the third switch 13a between the second battery cell 13, i.e., the second target battery cell and the antenna 113 corresponding to the second battery cell 13.

Referring back to FIG. 5, the states of the switches of the first target battery cell 11 and the second target battery cell 13 are shown over time according to an embodiment.

According to an embodiment, the controller 1200 may close the first switch 11a so that the first battery cell 11 and the first antenna 111 can be electrically connected at time t1. Here, during a time interval between the time t1 when the first switch 11a is closed and time t2, power may be transferred from the first battery cell 11 to the first antenna 111 and stored in the first antenna 111.

According to an embodiment, at time t2, the controller 1200 may close the third switch 13a so that the third battery cell 13 and the third antenna 113 can be electrically connected, and open the first switch 11a so that the first battery cell 11 and the first antenna 111 can be electrically disconnected. As described above, the first antenna 111 and the third antenna 113 are coupled to each other, and thus the power stored in the first antenna 111 is transferred to the third antenna 113 and supplied to the third battery cell 13 electrically connected to the third antenna 113.

According to an embodiment, the controller 1200 may calculate the SoC of the third battery cell 13 based on the battery data of the third battery cell 13 at time t3. When the SoC of the third battery cell 13 is lower than the preset reference SoC, the controller 1200 may control the electrical connection between the first switch 11a and the third switch 13a so that power can be transferred from the first battery cell 11, i.e., the first target battery cell to the third battery cell 13, i.e., the second target battery cell.

As described above, at time t3, the controller 1200 may close the first switch 11a so that the first battery cell 11 and the first antenna 111 can be electrically connected, and open the third switch 13a so that the third battery cell 13 and the third antenna 113 can be electrically disconnected. Here, during a time interval between the time t3 when the first switch 11a is closed and time t4, power may be transferred from the first battery cell 11 to the first antenna 111 and stored in the first antenna 111.

According to an embodiment, at time t4, the controller 1200 may close the third switch 13a so that the third battery cell 13 and the third antenna 113 can be electrically connected, and open the first switch 11a so that the first battery cell 11 and the first antenna 111 can be electrically disconnected. As described above, the first antenna 111 and the third antenna 113 are coupled to each other, and thus the power stored in the first antenna 111 is transferred to the third antenna 113 and supplied to the third battery cell 13 electrically connected to the third antenna 113.

According to an embodiment, the controller 1200 may calculate the SoC of the third battery cell 13 based on the battery data of the third battery cell 13 at time t5. When the SoC of the third battery cell 13 is lower than the preset reference SoC, the controller 1200 may control the electrical connection between the first switch 11a and the third switch 13a so that power can be transferred from the first battery cell 11, i.e., the first target battery cell to the third battery cell 13, i.e., the second target battery cell.

As described above, at time t5, the controller 1200 may close the first switch 11a so that the first battery cell 11 and the first antenna 111 can be electrically connected, and open the third switch 13a so that the third battery cell 13 and the third antenna 113 can be electrically disconnected. Here, during a time interval between the time t5 when the first switch 11a is closed and time t6, power may be transferred from the first battery cell 11 to the first antenna 111 and stored in the first antenna 111.

According to an embodiment, at time t6, the controller 1200 may close the third switch 13a so that the third battery cell 13 and the third antenna 113 can be electrically connected, and open the first switch 11a so that the first battery cell 11 and the first antenna 111 can be electrically disconnected. As described above, the first antenna 111 and the third antenna 113 are coupled to each other, and thus the power stored in the first antenna 111 is transferred to the third antenna 113 and supplied to the third battery cell 13 electrically connected to the third antenna 113.

According to an embodiment, the controller 1200 may calculate the SoC of the third battery cell 13 based on the battery data of the third battery cell 13 at time t7. When the SoC of the third battery cell 13 is higher than or equal to the preset reference SoC, the controller 1200 may stop the cell balancing that keeps the SoC balance between the first battery cell 11 and the third battery cell 13. Here, the controller 1200 may open both the first switch 11a and the third switch 13a from the time t7.

According to an embodiment, the preset reference SoC may correspond to the SoC of the second target battery cell to be reached by performing the cell balancing, and the reference SoC may be variously set, modified and applied depending on each SoC and/or design of the plurality of battery cells 11, 12, 13 and 14 of when the cell balancing is performed.

The battery system 1 according to an embodiment disclosed in this document may perform the active cell balancing based on the plurality of antennas 100 formed on the plurality of stacked PCBs. In other words, the battery system 1 according to an embodiment disclosed in this document may perform the active cell balancing based on the wireless antenna, and thus increase a space efficiency in a battery pack, compared to the battery system that performs the active cell balancing based on the wired antenna, which requires wires or various circuit elements. Further, the antenna 100 mounted to the battery system 1 disclosed in this document may be printed as a pattern on the PCB, and thus produced without errors in connection with a distance between the antennas, a pattern size of the antenna, the location of the antenna for the coupling, etc., thereby increasing an efficiency in performing the cell balancing. Further, the antenna 100 mounted to the battery system 1 disclosed in this document may be formed on the stacked PCB, thereby increasing the space efficiency.

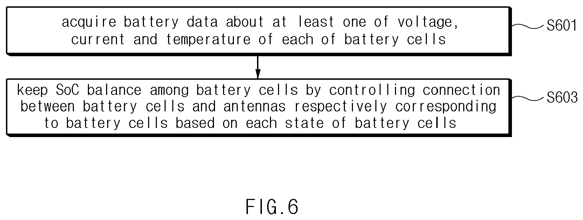

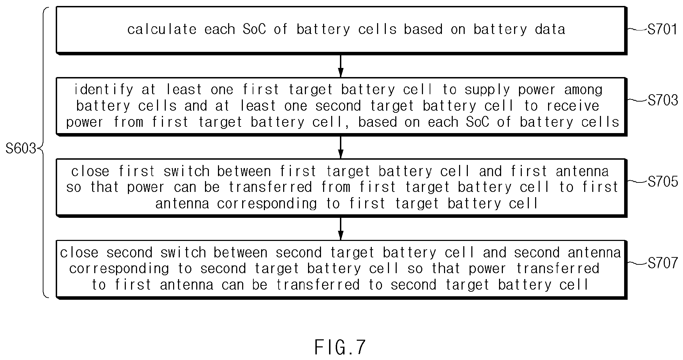

FIGS. 6 and 7 are flowcharts for describing operations of a battery system according to an embodiment disclosed in this document.

First, Referring to FIG. 6, in step S601, the battery system 1 (see FIG. 1) acquires battery data about at least one of the voltage, current and temperature of each of the plurality of battery cells 11, 12, 13 and 14 (see FIG. 1).

In step S603, the battery system 1 controls the connection between the plurality of battery cells 11, 12, 13 and 14 and the plurality of antennas 111 to 114 (see FIG. 4) respectively corresponding to the plurality of battery cells 11, 12, 13 and 14 based on each state of the plurality of battery cells 11, 12, 13 and 14, thereby keeping the SoC balance among the plurality of battery cells 11, 12, 13 and 14.

According to an embodiment, the plurality of antennas 111 to 114 may be formed on the plurality of PCBs to which the battery management device 1000 (see FIG. 1) included in the battery system 1 is mounted. Further, the plurality of antennas 111 to 114 may be different in pattern size from one another according to the corresponding battery cells.

Referring to FIG. 7, the details of step S603 will be shown.

First, in step S701, the battery system 1 calculates each SoC of the plurality of battery cells 11, 12, 13 and 14 based on the battery data of the plurality of battery cells 11, 12, 13 and 14.

In step S703, the battery system 1 identifies at least one first target battery cell to supply power among the plurality of battery cells 11, 12, 13 and 14, and at least one second target battery cell to receive the power from the first target battery cell, based on each SoC of the plurality of battery cells 11, 12, 13 and 14.

According to an embodiment, the operation of identifying the first target battery cell may include an operation of identifying the first target battery cell from the battery cell having the highest SoC among the plurality of battery cells 11, 12, 13 and 14, and the operation of identifying the second target battery cell may include an operation of identifying the second target battery cell from the battery cell having the lowest SoC among the plurality of battery cells 11, 12, 13 and 14.

In step S705, the battery system 1 closes the first switch between the first target battery cell and the first antenna so that power can be transferred from the first target battery cell to the first antenna corresponding to the first target battery cell.

In step S707, the battery system 1 closes the second switch between the second target battery cell and the second antenna corresponding to the second target battery cell so that power transferred to the first antenna can be transferred to the second target battery cell.

According to an embodiment, the operations of keeping the SoC balance among the plurality of battery cells 11, 12, 13 and 14 may be performed until the SoC of the second target battery cell reaches the preset reference SoC.

Heretofore, even though all components configuring the embodiments of the disclosure are described to be combined as one unit or to operate as a combination thereof, the disclosure is not limited to these embodiments. Without departing from the scope of the disclosure, all components may be selectively combined to one or more thereof to operate as a combination. Also, the term "comprise," "include" or "have" specifies the presence of stated components unless specifically stated to the contrary, and should be construed to further include other components rather than precluding the presence thereof.

The foregoing description is merely an illustrative description of the technical ideas disclosed in this document, and various modifications and changes can be made by a person having ordinary knowledge in the art, to which the embodiments disclosed in this document pertains, without departing from the essential characteristics of the embodiments disclosed in this document.

Accordingly, the embodiments disclosed in this document are intended not to limit but describe the technical ideas disclosed in this document, and the scope of the technical ideas disclosed in this document is not limited by these embodiments. The scope of the technical ideas disclosed in this document should be interpreted by claims appended below, and all technical ideas within the equivalent scope should be construed as falling within the scope of this document.

### [Reference Numerals]

1: battery system
10: battery module
11, 12, 13, 14: battery cell
100: antenna
1000: battery management device
1100: data acquisition unit
1200: controller
1300: memory

## Claims

1. A battery system comprising:
a plurality of battery cells;
a plurality of antennas correspondingly connected to the plurality of battery cells for each power transmission and reception of the plurality of battery cells, and different in pattern size from one another according to the corresponding battery cells; and
a battery management device configured to control connections between the plurality of battery cells and the plurality of antennas based on each state of the plurality of battery cells and keep a state of charge (SoC) balance between the plurality of battery cells.

2. The battery system of claim 1, wherein the plurality of antennas are disposed on a plurality of stacked printed circuit boards (PCBs) to which the battery management device is mounted.

3. The battery system of claim 2, wherein the plurality of antennas are coupled to each other.

4. The battery system of claim 3, wherein the corresponding antennas among the plurality of antennas respectively formed on different PCBs among the plurality of PCBs are configured to have pattern sizes corresponding to one another.

5. The battery system of claim 2, further comprising a plurality of switches for electrical connection between the plurality of battery cells and the plurality of antennas,
wherein the battery management device controls the electrical connection of the plurality of switches to keep the SoC balance between the plurality of battery cells.

6. The battery system of claim 5, wherein
the battery management device comprises:
a data acquisition unit configured to acquire battery data about at least one of voltage, current and temperature of each battery cell; and
a controller configured to control the electrical connection of the plurality of switches, and identify at least one first target battery cell to supply power among the plurality of battery cells and at least one second target battery cell to receive the power supplied from the first target battery cell, based on each SoC of the plurality of battery cells calculated based on the battery data.

7. The battery system of claim 6, wherein
the controller is configured to:
identify the first target battery cell from the battery cell having the highest SoC among the plurality of battery cells; and
identify the second target battery cell from the battery cell having the lowest SoC among the plurality of battery cells.

8. The battery system of claim 7, wherein
the controller is configured to:
control the electrical connection of a first switch between the first target battery cell and a first antenna corresponding to the first target battery cell to transfer power from the first target battery cell to the first antenna; and
control the electrical connection of a second switch between the second target battery cell and a second antenna corresponding to the second target battery cell to transfer the power from the first antenna to the second target battery cell.

9. The battery system of claim 8, wherein the controller controls the electrical connection between the first switch and the second switch until the SoC of the second target battery cell reaches a preset reference SoC.

10. A method of operating a battery system, comprising:
acquiring battery data about at least one of voltage, current and temperature of each of a plurality of battery cells; and
keeping a state of charge (SoC) balance between the plurality of battery cells by controlling connections between the plurality of battery cells and a plurality of antennas respectively corresponding to the plurality of battery cells based on each state of the plurality of battery cells.

11. The method of claim 10, wherein
the plurality of antennas are disposed on a plurality of stacked printed circuit boards (PCBs) to which a battery management device is mounted, and
the plurality of antennas are different in pattern size from one another according to the corresponding battery cells.

12. The method of claim 10, wherein the keeping the SoC balance between the plurality of battery cells comprises:
calculating each SoC of the plurality of battery cells based on the battery data;
identifying at least one first target battery cell to supply power among the plurality of battery cells and at least one second target battery cell to receive the power supplied from the first target battery cell, based on each SoC of the plurality of battery cells;
controlling the electrical connection of a first switch between the first target battery cell and a first antenna corresponding to the first target battery cell to transfer power from the first target battery cell to the first antenna; and
controlling the electrical connection of a second switch between the second target battery cell and a second antenna corresponding to the second target battery cell to transfer the power from the first antenna to the second target battery cell.

13. The method of claim 12, wherein the identifying the first target battery cell and the second target battery cell comprises:
identifying the first target battery cell from the battery cell having the highest SoC among the plurality of battery cells; and
identifying the second target battery cell from the battery cell having the lowest SoC among the plurality of battery cells.

14. The method of claim 12, wherein the keeping the SoC balance between the plurality of battery cells is performed until the SoC of the second target battery cell reaches a preset reference SoC.
